# EUROPEAN PATENT SPECIFICATION

(11) **EP 4 219 206 B1**
(45) Date of publication and mention of the grant of the patent: **28.01.2026**
(21) Application number: 22211905.9
(22) Date of filing: 07.12.2022
(51) Int. Cl.: B60K 1/04, H01M 10/625, B60H 1/00

(54) **VEHICLE-MOUNTED ELECTRIC COMPONENT COOLING STRUCTURE**
KÜHLSTRUKTUR FÜR FAHRZEUGMONTIERTE ELEKTRISCHE KOMPONENTEN
STRUCTURE DE REFROIDISSEMENT DE COMPOSANT ÉLECTRIQUE MONTÉ SUR VÉHICULE

(30) Priority: 28.01.2022 JP 2022012331
(43) Date of publication of application: 02.08.2023
(73) Proprietor: Suzuki Motor Corporation, Hamamatsu-shi, Shizuoka 432-8611 (JP)
(72) Inventor: TSUGE, Atsushi, Hamamatsu-shi, 432-8611 (JP); AKASHI, Nozomu, Hamamatsu-shi, 432-8611 (JP)
(74) Representative: Haseltine Lake Kempner LLP

(56) References cited:
- EP-B1- 1 956 281
- DE-A1- 102018 208 472
- FR-A1- 2 871 872
- US-A1- 2002 129 863
- US-A1- 2016 023 547
- US-A1- 2017 334 309

## Description

### [Technical Field]

The present invention relates to a vehicle-mounted electric component cooling structure.

### [Background Art]

An electric component generating heat, such as a battery, and a blower for cooling the electric component, are sometimes arranged in a rear region of a vehicle, such as a trunk.

For example, according to a high-voltage battery cooling structure disclosed in Patent Literature 1, a battery housing is provided in a region below a rear seat (i.e., a rear region of a vehicle), and a battery and a blower fan (hereinafter called a blower) for cooling the battery are arranged in the battery housing. According to the cooling structure, a certain site of the battery housing is partitioned by a partition plate, which forms a cooling air introduction chamber. A ventilation portion (slit) for taking air in an occupant compartment (passenger compartment) into the cooling air introduction chamber is formed on a wall member constituting the cooling air introduction chamber, and a communication hole into which an air inlet of the blower is inserted is formed in the partition plate. A shield plate is provided adjacent to the air inlet in the cooling air introduction chamber, thereby forming a meandering flow path extending from the ventilation portion to the blower. As a result, direct propagation of a sound from the blower to the inside of the occupant compartment is reduced. Part of the wall member constituting the cooling air introduction chamber is formed utilizing the wall member adjacent to the blower, such as a panel below the front end part of the rear seat and a wall forming a wheel housing.

### [Citation List]

### [Patent Literature]

[Patent Literature 1] JP 2002-166728 A

It is known from DE102018208472 to provide an air capture structure. It is known from FR2871872 to provide a ventilation duct for a ventilation and/or an air-conditioning system of, for example, a motor vehicle, that has a noise attenuation unit with an acoustic cavity.

### [Summary of Invention]

### [Problems to be Solved by the Invention]

However, according to the cooling structure disclosed in Patent Literature 1, the shield plate is required to be provided adjacent to the blower, and the flow path between the ventilation portion and the blower is required to be formed using the part of the wall member adjacent to the blower. Accordingly, there is a problem in that the place where the cooling structure is constructed is limited, and the layout flexibility about the elements of the cooling structure is low. Note that it is also conceivable that an electric component other than the battery is considered a cooling target by the blower. Also in this case, a similar problem can occur.

The present invention has been made to solve the problem described above, and it has an object to provide a vehicle-mounted electric component cooling structure capable of improving layout flexibility in comparison with the conventional art and reducing sound propagation from the blower to the occupant compartment.

### [Means for Solving the Problems]

The invention is as defined by the appended independent claims. Some optional features are provided by the dependent claims.

### [Advantageous Effect of Invention]

According to the present invention, a vehicle-mounted electric component cooling structure can be provided that is capable of improving layout flexibility in comparison with conventional art and reducing sound propagation from the blower to the occupant compartment.

### [Brief Description of Drawings]

[Figure 1] Figure 1 is a front view of a vehicle-mounted electric component cooling structure according to an embodiment of the present invention.
[Figure 2] Figure 2 shows a position of a ventilation portion of the vehicle-mounted electric component cooling structure.
[Figure 3] Figure 3 is a perspective view of a blower and a duct of the vehicle-mounted electric component cooling structure.
[Figure 4] Figure 4 is a top view of an assembly of the blower and the duct.
[Figure 5] Figure 5 is a side view of the duct viewed in an A direction shown in Figure 4.

### [Mode for Carrying Out the Invention]

Hereinafter, an embodiment of a vehicle-mounted electric component cooling structure according to the present invention is described with reference to the accompanying drawings.

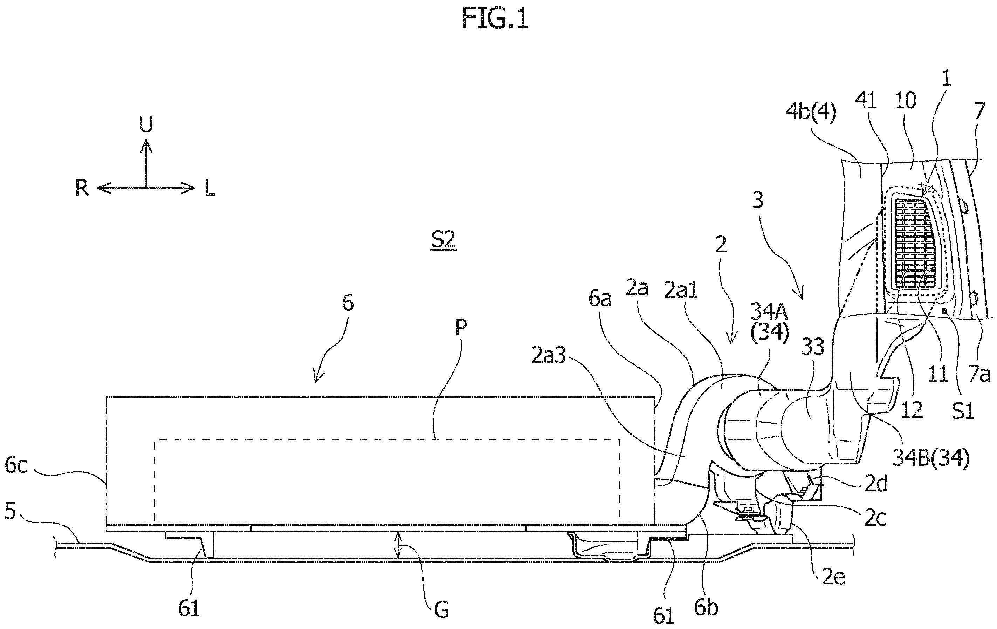

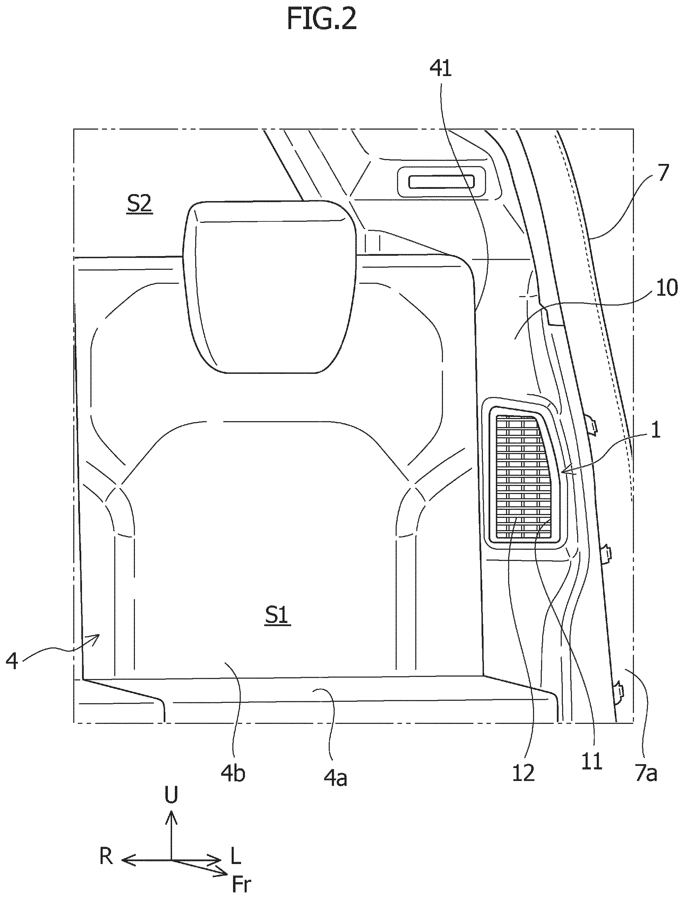

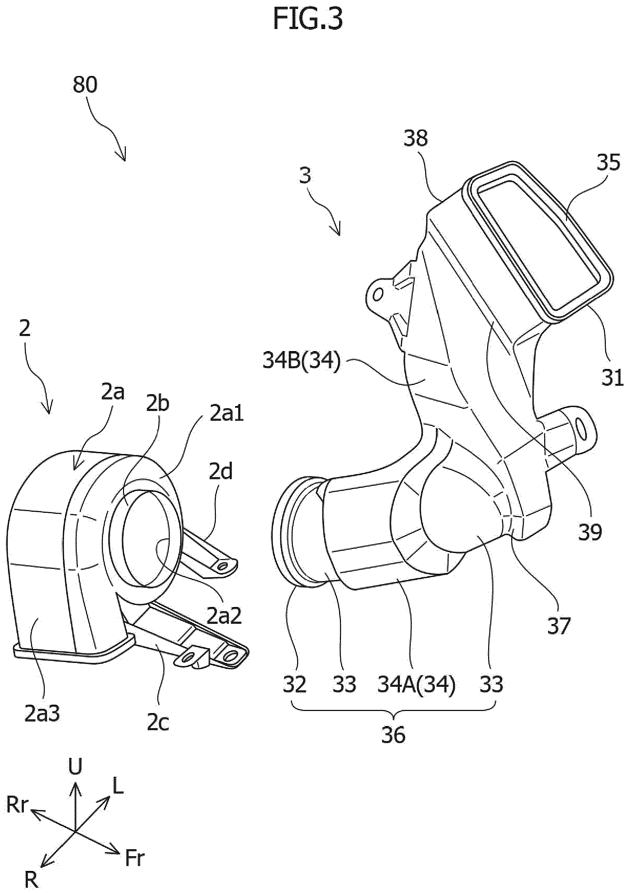

Figure 1 is a front view of a vehicle-mounted electric component cooling structure according to an embodiment of the present invention (specifically, a front view of the vehicle-mounted electric component cooling structure viewed from the front in the vehicle longitudinal direction). Figure 2 shows the position of a below-mentioned ventilation portion 1 of the vehicle-mounted electric component cooling structure. Figure 3 is a perspective view of a main part (a blower 2 and a duct 3 described later) of the vehicle-mounted electric component cooling structure. Note that in the drawings, an arrow Fr direction indicates the forward direction in the vehicle longitudinal direction, and an arrow Rr direction indicates the rearward direction in the vehicle longitudinal direction. An arrow R and an arrow L respectively indicate the right side and the left side in the vehicle width direction (car width direction) in view of an occupant facing ahead of the vehicle. An arrow U indicates the upward direction in the vehicle vertical direction.

Referring to Figures 1 and 2, the vehicle-mounted electric component cooling structure in this embodiment includes a ventilation portion 1, a blower 2 and a duct 3, and cools a predetermined electric component P in a rear region of the vehicle by an air cooling method. The rear region of the vehicle is a region that includes a region below a seat portion 4a of a rear seat 4 of the vehicle, and a region behind a seat back 4b of the rear seat 4 of the vehicle. A region forward of the rear seat 4 in the vehicle longitudinal direction constitutes most of an occupant compartment S1 of the vehicle.

In this embodiment, the electric component P that is a cooling target is arranged in a region rearward of the rear seat 4 in the rear region of the vehicle. Specifically, the electric component P is mounted on a part of a floor panel 5 rearward of the seat back 4b of the rear seat 4 in the vehicle longitudinal direction, the floor panel 5 constituting a floor portion of the vehicle. In other words, the electric component P is arranged in a trunk S2 behind the rear seat.

For example, an upper portion of the trunk S2 of the vehicle is configured to be opened and closed by a tonneau cover (not shown) provided slidably in the vehicle longitudinal direction at a height position corresponding to the top end of the rear seat 4 rearward of this rear seat 4. A region above the tonneau cover in a state in which the tonneau cover is closed constitutes part of the occupant compartment S1. Note that in a state in which the tonneau cover is open (a state shown in Figure 2), the trunk S2 and the occupant compartment S1 communicate with each other.

In this embodiment, the vehicle-mounted electric component cooling structure further includes a housing box 6 that internally stores the predetermined electric component P. For example, the housing box 6 is formed to have a rectangular box shape that is longer in the vehicle width direction, and is supported on the floor panel 5 via leg portions 61. In this embodiment, a gap G is secured between the housing box 6 and the floor panel 5 in the rear region of the vehicle (see Figure 1).

Although not specifically limited, in this embodiment, the electric component P is a high-voltage battery stored in the housing box 6. Note that the electric component P is not limited to a battery. For example, the component may be a DC/DC converter, an AC/DC converter or the like, and may be any electric component that easily generates heat and needs to be cooled.

The ventilation portion 1 has a ventilation hole 11 penetrating through a wall 10, which forms the occupant compartment S1 of the vehicle. In this embodiment, the ventilation portion 1 is positioned above the predetermined electric component P and the blower 2 in the vehicle vertical direction. Specifically, in this embodiment, the ventilation portion 1 is positioned above the predetermined electric component P and the blower 2 in the vehicle vertical direction, and between a side portion 41 of the rear seat 4 and a side panel 7 of the vehicle in the vehicle width direction.

More specifically, the wall 10, through which the ventilation hole 11 is penetrated, is a plastic trim that extends in the vertical direction along the side portion 41 of the seat back 4b of the rear seat 4 in the vehicle width direction outer side and is attached to the side panel 7. Consequently, the ventilation portion 1 is positioned adjacent to a door opening edge portion 7a that is opened on the side panel 7 and is for a rear side door. The wall 10 adjacent to the ventilation portion 1 is slightly inclined rearward in the vehicle longitudinal direction as extending upward in the vehicle vertical direction.

In this embodiment, it is configured so that air for cooling the electric component P is taken in from the ventilation portion 1 and is guided to the blower 2 through the duct 3. Consequently, in this embodiment, the ventilation hole 11 of the ventilation portion 1 functions as an air inlet for air cooling.

The ventilation hole 11 of the ventilation portion 1 is opened as a substantially rectangular hole elongated in the vehicle vertical direction. The ventilation portion 1 includes a foreign matter intrusion prevention portion 12 that is formed to have a grid shape on the inner side of a ventilation hole opening edge. By this foreign matter intrusion prevention portion 12, large foreign matter are prevented from intruding through the ventilation hole 11.

The blower 2 is provided in the rear region of the vehicle, and causes a flow of air for cooling the predetermined electric component P in the rear region. The blower 2 is arranged, together with the electric component P, in the rear region of the vehicle. In this embodiment, the blower 2 is arranged adjacent to the electric component P in the trunk S2 behind the rear seat. Specifically, the blower 2 is arranged on the floor panel 5 adjacent to one side wall 6a in the vehicle width direction of the housing box 6 (left in Figure 2) (in other words, one side wall 6a in the longitudinal direction of the housing box 6).

Referring to Figure 3, the blower 2 includes a casing 2a, and a cylindrical connection portion 2b communicating with the duct 3. In this embodiment, the blower 2 is configured to supply air taken in through the ventilation portion 1 and the duct 3 into the housing box 6.

Although not specifically limited, for example, the blower 2 is a centrifugal fan (or a centrifugal blower). Inside the casing 2a, centrifugal blades for blowing (e.g., a sirocco fan) are rotatably supported.

An intake 2a2 for taking in air is opened on one side surface 2a1 of the casing 2a. An electric motor for driving the centrifugal blades is provided on the other side surface (the side surface opposite to the intake 2a2) of the casing 2a. The casing 2a is formed so as to surround the centrifugal blades. A cylindrical discharge cylinder 2a3 for discharging air taken in from the intake 2a2 is provided at a predetermined angle position in the circumferential direction of the casing 2a.

The connection portion 2b is cylindrically formed, for example. The connection portion 2b is attached to the opening edge portion of the intake 2a2 of the casing 2a, and protrudes from the one side surface 2a1 of the casing 2a.

A first bracket 2c and a second bracket 2d for supporting the blower 2 from below are provided under the casing 2a of the blower 2. The first bracket 2c and the second bracket 2d are coupled to the floor panel 5 via an intermediate bracket 2e or the like. Specifically, the intermediate bracket 2e is made of a thin metal plate and is formed to be bent in a hat shape protruding downward. An intermediate portion of the intermediate bracket 2e in the longitudinal direction is fixed on the floor panel 5. One end portion of the intermediate bracket 2e is fixed to the lower end of the first bracket 2c. The other end portion of the intermediate bracket 2e is fixed to the lower end of the second bracket 2d.

In a state in which the blower 2 is arranged adjacent to the one side wall 6a of the housing box 6 in the vehicle width direction, the connection portion 2b extends substantially forward in the vehicle longitudinal direction, and the discharge cylinder 2a3 of the casing 2a extends substantially downward in the vehicle vertical direction. More specifically, in a state in which a vehicle-width-direction inner part of the one side surface 2a1 of the casing 2a is inclined to be positioned slightly on the front side in the vehicle longitudinal direction more than a vehicle-width-direction outer part of the one side surface 2a1, the blower 2 is arranged on the floor panel 5. Consequently, the cylindrical connection portion 2b extends so as to be apart from the one side wall 6a of the housing box 6 as extending forward in the vehicle longitudinal direction (in other words, in the drawing, so as to approach the inner surface of the left side panel 7).

The duct 3 forms a flow path extending from the ventilation portion 1 to the blower 2. One end portion of the duct 3 communicates with the ventilation portion 1. The other end portion of the duct 3 communicates with the connection portion 2b of the blower 2. As described above, in this embodiment, the ventilation hole 11 of the ventilation portion 1 functions as an air inlet for air cooling. That is, the duct 3 is used as piping for guiding air in the occupant compartment S1 from the ventilation portion 1 to the blower 2. Note that the structure of the duct 3 is described later in detail.

The air guided through the duct 3 is discharged through the discharge cylinder 2a3 of the blower 2. The air discharged through the discharge cylinder 2a3 is guided into the housing box 6 through an air inlet pipe 6b provided on the one side wall 6a of the housing box 6 in the vehicle width direction. In other words, air blown by the blower 2 is pumped into the housing box 6. An exhaust pipe, not shown, is provided on the other side wall 6c of the housing box 6 in the vehicle width direction. When the blower 2 is activated, air is pumped into the housing box 6 through the discharge cylinder 2a3 and the inlet pipe 6b. At this time, in the internal space of the housing box 6, an air flow occurs substantially from the one side wall 6c toward the other side wall 6c along the surface of the electric component P in the housing box 6. By the air flow along the surface of the electric component P as described above, the electric component P is cooled. The air heated by heat exchange through the surface of the electric component P is discharged out of the housing box 6 through the exhaust pipe.

Incidentally, when the blower 2 is activated, a high-frequency sound is often produced. In this case, the high-frequency sound (noise) possibly propagates to the occupant compartment S1 through the connection portion 2b of the blower 2, the duct 3 and the ventilation portion 1. In contrast, the vehicle-mounted electric component cooling structure according to this embodiment has a structure described below to effectively reduce propagation of the high-frequency sound to the occupant compartment S1 so as to maintain comfort in the occupant compartment S1.

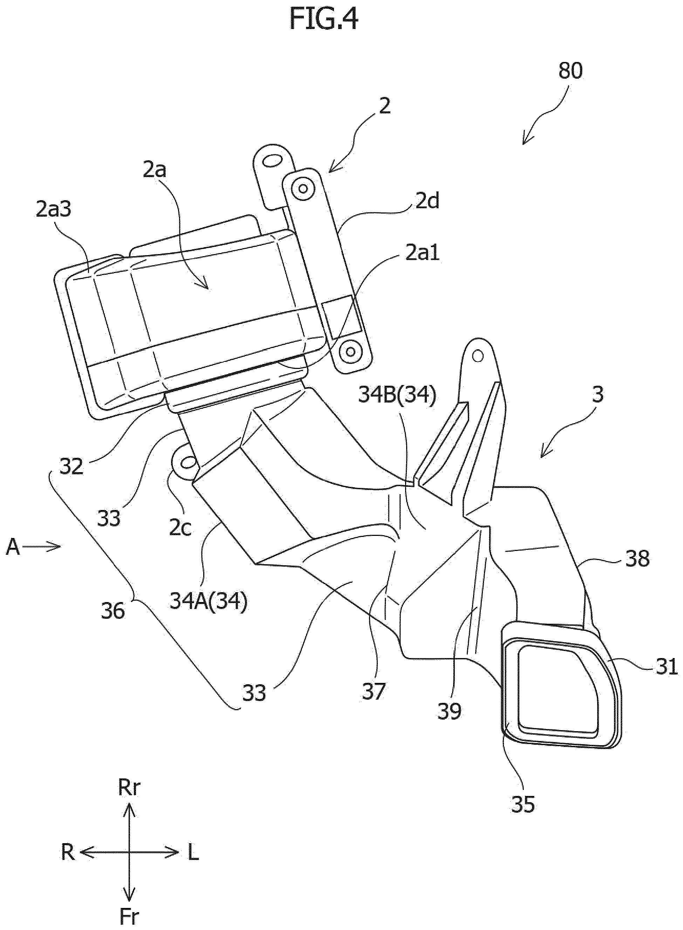

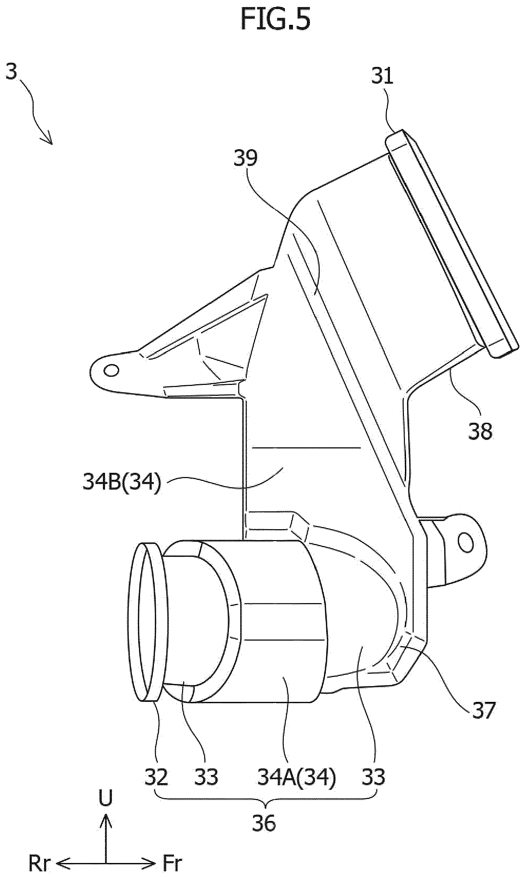

Next, the structure of the duct 3 is described mainly with reference to Figures 3 to 5. Figure 4 is a top view of an assembly 80 of the blower 2 and the duct 3. Figure 5 is a side view of the duct 3 viewed in the A direction shown in Figure 4.

Referring to Figure 3, the duct 3 includes: a first end portion 31 that communicates with the ventilation portion 1; a second end portion 32 that communicates with the blower 2; cylindrically formed reference tube portions 33; and a plurality of bulging tube portions 34 that bulge outward at the reference tube portions 33 and are cylindrically formed. Note that in this embodiment, the first end portion 31 corresponds to "end portion that communicates with the ventilation portion" according to the present invention.

For example, the duct 3 is made of a plastic material, and is formed by injection molding. By combining the duct 3 and the blower 2, the assembly 80 of the duct 3 and the blower 2 is configured as shown in Figures 4 and 5.

The first end portion 31 is formed to have a cylindrical shape, which constitutes one end portion of the duct 3 communicating with the ventilation portion 1. Specifically, the first end portion 31 is formed to have a substantially rectangular tube shape, and is in contact with a ventilation hole peripheral portion of the ventilation portion 1 from the back side of the wall 10 forming the occupant compartment S1 of the vehicle, thus allowing the first end portion 31 to communicate with the ventilation portion 1. The first end portion 31 extends forward in the vehicle longitudinal direction and in an obliquely upward direction according to the inclination of the wall 10 adjacent to the ventilation portion 1. Note that a sealing member 35, annularly shaped so as to be along the inner peripheral surface of the first end portion 31, is fitted inside this first end portion 31. The sealing member 35 is in contact with the ventilation hole peripheral portion of the ventilation portion 1, which seals the gap between the duct 3 and the ventilation portion 1 (wall 10).

The second end portion 32 is a part which is cylindrically formed and into which the connection portion 2b of the blower 2 is inserted, and constitutes the other end portion of the duct 3 that communicates with the blower 2. The second end portion 32 is cylindrically formed. The connection portion 2b of the blower 2 is then inserted (fitted) into the second end portion 32 of the duct 3, and the other end of the duct 3 and the connection portion 2b of the blower 2 communicate with each other.

The reference tube portions 33 are parts that constitute regulator portions that regulate a flow path sectional area of the flow path in the duct 3. Although not specifically limited, the reference tube portions 33 are substantially cylindrically formed, and are separately provided at parts of the duct 3 on the blower 2 side. Thus, two reference tube portions 33 are provided.

The plurality of bulging tube portions 34 are parts that are cylindrically formed so as to bulge outward at (bulge outward relative to) the outer surface of the reference tube portions 33, and are parts (enlarged portions) that constitute spaces enlarged in comparison with the regulator portion on the flow path in the duct 3. The plurality of bulging tube portions 34 are separated from each other in the direction along the flow path in the duct 3. The plurality of bulging tube portions 34 bulge with sizes different from each other. That is, the plurality of bulging tube portions 34 have internal volumes that are volumes different from each other.

In this embodiment, the duct 3 includes, as the plurality of bulging tube portions 34: a first bulging tube portion 34A positioned on the blower 2 side; and a second bulging tube portion 34B positioned on the ventilation portion 1 side. The internal volume of the second bulging tube portion 34B is greater than the internal volume of the first bulging tube portion 34A.

In other words, the first bulging tube portion 34A is positioned closer to the blower 2 than the second bulging tube portion 34B in the direction along the flow path in the duct 3. The second bulging tube portion 34B is positioned closer to the ventilation portion 1 than the first bulging tube portion 34A in the direction along the flow path in the duct 3. Furthermore, the first bulging tube portion 34A is positioned adjacent to the blower 2, which is a source of generated noise (high-frequency sound), and the second bulging tube portion 34B is positioned adjacent to the occupant compartment S1 that is a target region where noise propagation is prevented.

The first bulging tube portion 34A has a substantially cylindrical cross-section and is positioned between the two reference tube portions 33. The first bulging tube portion 34A communicates with the two reference tube portions 33, and extends substantially forward in the vehicle longitudinal direction. More specifically, a blower-side piping portion 36 made up of the first bulging tube portion 34A and the two reference tube portions 33 extends in the horizontal direction, and it is slightly bent so as to be apart from the one side wall 6a of the housing box 6 as extending forward in the vehicle longitudinal direction (in other words, so as to approach the inner surface of the left side panel 7) (see Figure 4).

The second bulging tube portion 34B has a substantially rectangular tube shape cross-section, and is positioned between the reference tube portion 33 on the ventilation portion 1 side among the two reference tube portions 33 and the first end portion 31.

In this embodiment, the second bulging tube portion 34B has a cross-section flat in the vehicle width direction, and extends in the vehicle vertical direction. The duct length of the second bulging tube portion 34B in the vehicle vertical direction is greater than the duct width of the second bulging tube portion 34B in the vehicle width direction. That is, the second bulging tube portion 34B is formed as a substantially elongated cylindrical body that includes inner walls facing each other in the vehicle width direction.

In this embodiment, the flow path in the duct 3 is bent at a predetermined position between the first bulging tube portion 34A and the second bulging tube portion 34B. Although not specifically limited, the predetermined position between the first bulging tube portion 34A and the second bulging tube portion 34B is set at a connection portion 37 between the reference tube portion 33 on the ventilation portion 1 side of the two reference tube portions 33 and the second bulging tube portion 34B, in the duct 3 (in other words, the connection portion 37 between the blower-side piping portion 36 and the second bulging tube portion 34B in the duct 3).

Specifically, the flow path in the duct 3 extends substantially forward in the vehicle longitudinal direction from the second end portion 32 to the blower-side piping portion 36, is bent upward at substantially 90 degrees at the connection portion 37, and subsequently extends substantially upward in the vehicle vertical direction at the second bulging tube portion 34B.

In this embodiment, the flow path in the duct 3 is also bent at a predetermined position between the second bulging tube portion 34B and the first end portion 31. Specifically, the duct 3 includes a ventilation portion side piping portion 38 that is cylindrically formed and causes an upper portion of the second bulging tube portion 34B and the first end portion 31 to communicate with each other. The ventilation portion side piping portion 38 is formed to have a substantially rectangular cylindrical shape. Although not specifically limited, the predetermined position between the second bulging tube portion 34B and the first end portion 31 is set at a connection portion 39 between the second bulging tube portion 34B and the ventilation portion side piping portion 38 in the duct 3.

More specifically, in this embodiment, one end portion of the ventilation portion side piping portion 38 communicates with a top-end-side part of the side wall of the second bulging tube portion 34B in the vehicle width direction outer side, and the other end portion of the ventilation portion side piping portion 38 communicates with the first end portion 31. That is, the flow path in the duct 3 is shifted in the vehicle width direction at the connection portion 39 in the duct 3, and is bent to have a crank shape, for example.

Specifically, the flow path in the duct 3 extends upward in the vehicle vertical direction at the second bulging tube portion 34B, is bent in the vehicle width direction outer side at substantially 90 degrees at the connection portion 39, and substantially extends forward in the vehicle longitudinal direction and obliquely upward direction at the ventilation portion side piping portion 38.

Next, the operation of the vehicle-mounted electric component cooling structure according to this embodiment is described with an example of a case in which a high-frequency sound occurs is produced by blower 2 by activation of the blower 2.

Part of the high-frequency sound caused from the blower 2 starts to propagate from the connection portion 2b of the blower 2 through the duct 3 (the flow path in the duct 3). From the blower 2 side toward the ventilation portion 1 side, the sound propagation path is provided sequentially with the reference tube portion 33 as the first one (regulator portion), the first bulging tube portion 34A (enlarged portion), the reference tube portion 33 as the second one (regulator portion), a first bent portion (connection portion 37), the second bulging tube portion 34B (enlarged portion), a second bent portion (connection portion 39), and the ventilation portion side piping portion 38. As described above, the sound propagation path is provided with the plurality of bulging tube portions 34 (the first bulging tube portion 34A and the second bulging tube portion 34B), in other words, multiple combinations of regulator portions and enlarged portions. Consequently, the level of the high-frequency sound having started propagating through the duct 3 is effectively attenuated in the plurality of bulging tube portions 34 at the middle of the propagation path. As a result, before the ventilation portion 1, the level of the high-frequency sound is attenuated to a degree allowing the occupant in the occupant compartment S1 to ignore the sound.

In the vehicle-mounted electric component cooling structure according to this embodiment, the flow path between the ventilation portion 1 and the blower 2 is formed of the duct 3, and is a structure reducing propagation of the high-frequency sound from the blower 2 to the occupant compartment S1 by providing the duct 3 with the plurality of bulging tube portions 34 (34A and 34B). Consequently, in comparison with a conventional structure that is formed by providing the shield plate adjacent to the blower and by using part of the wall member adjacent to the blower as the flow path between the ventilation portion and the blower, the vehicle-mounted electric component cooling structure according to this embodiment has small restriction of the place at which the cooling structure is constructed, and high layout flexibility of elements about the cooling structure. Specifically, for example, even if the flow path between the ventilation portion 1 and the blower 2 is through a complicated path, the ventilation portion 1 and the blower 2 are unavoidably arranged at height positions greatly different from each other in the vehicle vertical direction, the blower 2 is unavoidably arranged at a greatly spaced apart position from the ventilation portion 1 in comparison with the conventional structure, or the like, the structure of reducing high-frequency propagation to the occupant compartment S1 can be easily constructed only by forming the duct 3 including the plurality of bulging tube portions 34 to have the length, shape and the like in conformity with the layout of the application region of the cooling structure. Consequently, the vehicle-mounted electric component cooling structure according to this embodiment has lower restriction of the place at which the cooling structure may be constructed than a conventional construction, and higher layout flexibility of elements (the ventilation portion 1, the blower 2, the duct 3, etc.) of the cooling structure than a conventional construction.

As described above, the vehicle-mounted electric component cooling structure according to this embodiment can improve layout flexibility in comparison with conventional art and reduce sound propagation from the blower 2 to the occupant compartment S1. The sound propagation path is provided with the plurality of bulging tube portions 34 (the first bulging tube portion 34A and the second bulging tube portion 34B), in other words, the multiple combinations of regulator portions and enlarged portions. Accordingly, sound propagation from the blower 2 to the occupant compartment S1 is further efficiently reduced.

In this embodiment, the internal volume of the second bulging tube portion 34B on the ventilation portion 1 side is greater than the internal volume of the first bulging tube portion 34A on the blower 2. Accordingly, noise not having been completely attenuated in the first bulging tube portion 34A positioned adjacent to the blower 2, which is the source of generated noise (high-frequency sound), is securely attenuated in the second bulging tube portion 34B positioned adjacent to the occupant compartment S1, which is the target region at which noise propagation is prevented. The plurality of bulging tube portions 34 bulge by sizes different from each other, which facilitates arrangement and formation of the duct 3 in conformity with the layout of the application region of the cooling structure, and improves the layout flexibility.

In this embodiment, the second bulging tube portion 34B has a cross-section flat in the vehicle width direction, and extends in the vehicle vertical direction. The duct length of the second bulging tube portion 34B in the vehicle vertical direction is greater than the duct width of the second bulging tube portion 34B in the vehicle width direction. Accordingly, the sound from the blower 2 is reflected between the two inner walls of the second bulging tube portion 34B that face each other in the vehicle width direction, thus facilitating interference. As a result, the sound from the blower 2 tends to be effectively attenuated before the ventilation portion 1.

In this embodiment, the flow path in the duct 3 is bent at the predetermined position between the first bulging tube portion 34A and the second bulging tube portion 34B, and the position between the second bulging tube portion 34B and the first end portion 31. Thus, the sound propagation path is bent at the plurality of points. Consequently, at the bent points (the connection portion 37 and the connection portion 39), the sound from the blower 2 is complexly reflected by the inner walls of the duct 3, thus facilitating interference.

The description of this embodiment is an example for illustrating the present invention, and does not limit the invention described in the claims. The configuration of each component of the present invention is not limited to that in the embodiment described above, and can be variously modified in a technical scope described in the claims.

For example, in this embodiment, the internal volume of the second bulging tube portion 34B may be less than the internal volume of the first bulging tube portion 34A, or be the same as the internal volume of the first bulging tube portion 34A. Furthermore, the number of bulging tube portions 34 is not limited to two, and may be three or more. The shape of each bulging tube portion 34 may be appropriately configured. For example, the bulging tube portions 34 is not limited to the cylindrical shape or the rectangular cylindrical shape. Appropriate sectional shape, such as a triangular cylindrical shape, a pentagonal cylindrical shape, an elliptical cylindrical shape or the like may be adopted. The outer peripheral surfaces of the bulging tube portions 34 having appropriate shapes may be in contact with the side panel 7 or a plastic trim (wall 10). Accordingly, the vibrations of the duct 3 are prevented.

In this embodiment, the flow path in the duct 3 is bent at substantially 90 degrees at the connection portion 37, and is bent to have the crank shape at the connection portion 39. Without limitation to this, the path may be bent at an appropriate angle and with an appropriate shape. For example, the flow path in the duct 3 may be bent at an acute angle. Accordingly, the sound attenuation effect can be further improved. The flow path in the duct 3 is bent at two points. Without limitation to this, the path may be bent at one point or be bent at three or more points, or is not necessarily bent. The ventilation portion 1 is formed at the trim on the side of the rear seat 4. Without limitation to this, the ventilation portion 1 may be formed on an appropriate wall that forms the occupant compartment S1. Furthermore, it is assumed that the electric component P is arranged in the trunk S2 behind the rear seat. Without limitation to this, the electric component P may be arranged below the seat portion 4a of the rear seat 4. In this case, the blower 2 may be arranged below the seat portion 4a together with the electric component P, and arranged in the trunk S2. The blower 2 may be arranged below the seat portion 4a, and the electric component P may be arranged in the trunk S2.

In this embodiment, the blower 2 supplies air taken in through the ventilation portion 1 and the duct 3, into the housing box 6, thus cooling the electric component P. The direction of the air flow is not limited to this. That is, the air flow may be inverted from that in this embodiment. In this case, the blower 2 takes in air in the housing box 6, and discharges the taken air through the duct 3 and the ventilation portion 1, thus causing an air flow along the surface of the electric component P in the housing box 6 and cooling the electric component P. Even in this case, the plurality of bulging tube portions 34 of the duct 3 can effectively prevent the sound from the blower 2 from propagating to the occupant compartment S1 through the duct 3 and the ventilation portion 1.

### [Reference Signs List]

- 1: Ventilation portion
- 2: Blower
- 3: Duct
- 10: Wall
- 11: Ventilation hole
- 31: First end portion (end portion)
- 33: Reference tube portion
- 34: Plurality of bulging tube portions
- 34A: First bulging tube portion
- 34B: Second bulging tube portion
- P: Electric component
- S1: Occupant compartment

## Claims

1. A vehicle-mounted electric component cooling structure, comprising: a ventilation portion (1) that has a ventilation hole (11) penetrating a wall (10) forming an occupant compartment (S1) of a vehicle; a blower (2) that is provided in a rear region of the vehicle and causes an air flow for cooling a predetermined electric component (P) in the rear region; and a duct (3) that forms a flow path extending from the ventilation portion (1) to the blower (2),
**characterized in that**
the duct (3) includes two reference tube portions (33, 33) that are cylindrically formed, and a plurality of bulging tube portions (34) that bulge outward at an outer surface of the two reference tube portions (33, 33) and are cylindrically formed,
wherein the ventilation portion (1) is positioned above the predetermined electric component (P) and the blower (2) in a vehicle vertical direction,
wherein the blower (2) includes a connection portion (2b) that communicates with the duct (3) and extends forward in a vehicle longitudinal direction,
wherein the plurality of bulging tube portions (34) include a first bulging tube portion (34A) that is positioned between the two reference tube portions (33, 33) and extends in a horizontal direction communicating with the two reference tube portions (33, 33), and a second bulging tube portion (34B) that is positioned closer to the ventilation portion (1) than the reference tube portion (33) on the ventilation portion (1) side among the two reference tube portions (33, 33) in a direction along the flow path and extends in the vehicle vertical direction,
wherein an internal volume of the second bulging tube portion (34B) is greater than an internal volume of the first bulging tube portion (34A), and
wherein a duct length of the second bulging tube portion (34B) in the vehicle vertical direction is greater than a duct width of the second bulging tube portion (34B) in a vehicle width direction.

2. The vehicle-mounted electric component cooling structure according to claim 1,
wherein the flow path in the duct (3) is bent at a predetermined position between the reference tube portion (33) on the ventilation portion (1) side and the second bulging tube portion (34B).

3. The vehicle-mounted electric component cooling structure according to claim 1 or 2,
wherein the duct (3) includes an end portion (31) that is cylindrically formed and communicates with the ventilation portion (1), and
the flow path in the duct (3) is bent at a predetermined position between the second bulging tube portion (34B) and the end portion (31).

## Patentansprüche

1. Kühlstruktur für fahrzeugmontierte elektrische Komponenten, umfassend: einen Belüftungsabschnitt (1), der eine Belüftungsöffnung (11) aufweist, die eine Wand (10) durchdringt, die einen Insassenraum (S1) eines Fahrzeugs bildet; ein Gebläse (2), das in einem hinteren Bereich des Fahrzeugs bereitgestellt ist und einen Luftstrom zum Kühlen einer vorbestimmten elektrischen Komponente (P) in dem hinteren Bereich eerzeugt; und einen Kanal (3), der einen Strömungsweg bildet, der sich von dem Belüftungsabschnitt (1) zu dem Gebläse (2) erstreckt,
**dadurch gekennzeichnet, dass**
der Kanal (3) zwei Referenzrohrabschnitte (33, 33), die zylindrisch ausgebildetsind, und eine Vielzahl von gewölbten Rohrabschnitten (34) beinhaltet, die sich an einer Außenfläche der beiden Referenzrohrabschnitte (33, 33) nach außen wölben und zylindrisch ausgebildetsind,
wobei der Belüftungsabschnitt (1) oberhalb der vorbestimmten elektrischen Komponente (P) und des Gebläses (2) in einer vertikalen Richtung des Fahrzeugs positioniert ist,
wobei das Gebläse (2) einen Verbindungsabschnitt (2b) beinhaltet, der mit dem Kanal (3) in Verbindung steht und sich in einer Längsrichtung des Fahrzeugs nach vorne erstreckt,
wobei die Vielzahl von gewölbten Rohrabschnitten (34) einen ersten gewölbten Rohrabschnitt (34A) beinhaltet, der zwischen den beiden Referenzrohrabschnitten (33, 33) positioniert ist und sich in einer horizontalen Richtung erstreckt, die mit den beiden Referenzrohrabschnitten (33, 33) in Verbindung steht, und einen zweiten gewölbten Rohrabschnitt (34B), der näher an dem Belüftungsabschnitt (1) als der Referenzrohrabschnitt (33) auf der Seite des Belüftungsabschnitts (1) unter den beiden Referenzrohrabschnitten (33, 33) in einer Richtung entlang des Strömungswegs positioniert ist und sich in der vertikalen Richtung des Fahrzeugs erstreckt,
wobei ein Innenvolumen des zweiten gewölbten Rohrabschnitts (34B) größer ist als ein Innenvolumen des ersten gewölbten Rohrabschnitts (34A), und
wobei eine Kanallänge des zweiten gewölbten Rohrabschnitts (34B) in der vertikalen Richtung des Fahrzeugs größer ist als eine Kanalbreite des zweiten gewölbten Rohrabschnitts (34B) in einer Breitenrichtung des Fahrzeugs.

2. Kühlstruktur für fahrzeugmontierte elektrische Komponenten nach Anspruch 1,
wobei der Strömungsweg in dem Kanal (3) an einer vorbestimmten Position zwischen dem Referenzrohrabschnitt (33) auf der Seite des Belüftungsabschnitts (1) und dem zweiten gewölbten Rohrabschnitt (34B) gekrümmt ist.

3. Kühlstruktur für fahrzeugmontierte elektrische Komponenten nach Anspruch 1 oder 2,
wobei der Kanal (3) einen Endabschnitt (31) beinhaltet, der zylindrisch ausgebildet ist und mit dem Belüftungsabschnitt (1) in Verbindung steht, und
der Strömungsweg in dem Kanal (3) an einer vorbestimmten Position zwischen dem zweiten gewölbten Rohrabschnitt (34B) und dem Endabschnitt (31) gekrümmt ist.

## Revendications

1. Structure de refroidissement de composant électrique montée sur véhicule, comprenant : une partie de ventilation (1) qui présente un orifice de ventilation (11) traversant une paroi (10) formant un habitacle (S1) d'un véhicule ; une soufflante (2) qui est prévue dans une région arrière du véhicule et entraîne un écoulement d'air destiné à refroidir un composant électrique prédéterminé (P) dans la région arrière ; et un conduit (3) qui forme un trajet d'écoulement s'étendant de la partie de ventilation (1) vers la soufflante (2),
**caractérisée en ce que**
le conduit (3) comporte deux parties de tube de référence (33, 33) qui sont de forme cylindrique, et une pluralité de parties de tube bombées (34) qui bombent vers l'extérieur au niveau d'une surface externe des deux parties de tube de référence (33, 33) et sont de forme cylindrique,
dans laquelle la partie de ventilation (1) est positionnée au-dessus du composant électrique prédéterminé (P) et de la soufflante (2) dans une direction verticale de véhicule,
dans laquelle la soufflante (2) comporte une partie de liaison (2b) qui est en communication avec le conduit (3) et s'étend vers l'avant dans une direction longitudinale de véhicule,
dans laquelle la pluralité de parties de tube bombées (34) comportent une première partie de tube bombée (34A) qui est positionnée entre les deux parties de tube de référence (33, 33) et s'étend dans une direction horizontale communiquant avec les deux parties de tube de référence (33, 33), et une seconde partie de tube bombée (34B) qui est positionnée plus proche de la partie de ventilation (1) que la partie de tube de référence (33) sur le côté de la partie de ventilation (1) parmi les deux parties de tube de référence (33, 33) dans une direction le long du trajet d'écoulement et s'étend dans la direction verticale de véhicule,
dans laquelle un volume interne de la seconde partie de tube bombée (34B) est supérieur à un volume interne de la première partie de tube bombée (34A), et
dans laquelle une longueur de conduit de la seconde partie de tube bombée (34B) dans la direction verticale de véhicule est supérieure à une largeur de conduit de la seconde partie de tube bombée (34B) dans une direction de la largeur de véhicule.

2. Structure de refroidissement de composant électrique montée sur véhicule selon la revendication 1,
dans laquelle le trajet d'écoulement dans le conduit (3) est courbé au niveau d'une position prédéterminée entre la partie de tube de référence (33) sur le côté de la partie de ventilation (1) et la seconde partie de tube bombée (34B).

3. Structure de refroidissement de composant électrique montée sur véhicule selon la revendication 1 ou 2,
dans laquelle le conduit (3) comporte une partie d'extrémité (31) qui est de forme cylindrique et est en communication avec la partie de ventilation (1), et
le trajet d'écoulement dans le conduit (3) est courbé au niveau d'une position prédéterminée entre la seconde partie de tube bombée (34B) et la partie d'extrémité (31).
